# EUROPEAN PATENT SPECIFICATION

(11) **EP 3 750 666 B1**
(45) Date of publication and mention of the grant of the patent: **31.08.2022**
(21) Application number: 20000199.8
(22) Date of filing: 29.05.2020
(51) Int. Cl.: B23K 26/348, B23K 9/00, B23K 9/025, B23K 9/028, B23K 9/18, B23K 26/00, B23K 26/262, B23K 26/282, B23K 26/32, B23K 28/02, B65D 90/00, B23K 101/00, B23K 101/12, B23K 103/04

(54) **METHODS OF WELDING OF GAS TANKS OF RAILWAY TANK WAGONS**
VERFAHREN ZUM SCHWEISSEN VON EISENBAHN-GAS-KESSELWAGEN
MÉTHODES DE SOUDAGE DE WAGONS CITERNE POUR LE GAZ

(30) Priority: 10.06.2019 PL 43019819; 10.06.2019 PL 43019919; 10.06.2019 PL 43020019
(43) Date of publication of application: 16.12.2020
(73) Proprietor: Chemet S.A., 42-600 Tarnowskie Góry (PL)
(72) Inventor: ADAMIEC, Janusz, 40-585 Katowice (PL)

(56) References cited:
- RU-C1- 2 660 503
- RU-C1- 2 660 791
- US-A1- 2010 320 174
- US-A1- 2012 273 466
- US-A1- 2012 325 787

## Description

The subject of the invention relates to methods used for the welding of gas (tank) containers mounted on railway tank wagons.

Presently, gas containers mounted on railway running gear are usually made using submerged arc welding or MAG/MIG welding (i.e. active gas-shielded or inert gas-shielded welding involving the use of a consumable electrode). The submerged arc welding technology requires the application of specialist extension arms and multi-head welding stations. The technology involves double-V butt welded joints with a welding threshold of approximately 2-3 mm, which significantly increases the volume of the weld. The welding process is performed under flux as multilayer welding (eight layers or more) at a welding rate of up to 0.6 m/min. Before welding the material is heated using gas torches to prevent excessively high cooling rates and, consequently, the formation of martensitic structures significantly decreasing the toughness of welded joints. The above-named technology is both time and energy-consuming.

Patent specification JP2001334377 presents the already known laser butt welding process (involving the use of the laser beam and arc) enabling the reduction of welding time without compromising the high quality of the welded joint. In accordance with the disclosed solution, a gap (opening) of an element cut on the linear energy side is accordingly larger than the gap on the opposite side; the cross-section is Y-shaped and the plate is cut using gas or likewise. Butting faces on the linear energy side are butt-adjacent if elements to be welded have been cut out using gas (or likewise) and the edges of adjacent elements form a Y-shaped gap. The edge surface where the gap between elements to be welded is the largest is subjected to arc and laser beam radiation. As a result, a butt welded joint is formed using both arc and laser beam radiation, where plasma induced by the laser beam "inserts" arc plasma to the bottom part of the groove, plasma is generated in the lower layer and deep penetration takes place.

Another patent specification JP 2007260715 presents the fabrication of a high-strength welded pipe made of steel, characterised by tensile strength >800 MPa and excellent resistance to the propagation of cracks. Because of the aforesaid properties, the above-named pipe is suitable for the transport of natural gas and crude oil. During the process of production, a steel plate having tensile strength >800 MPa and characterised by excellent crack propagation resistance is subjected to cold bending so that it could obtain the pipe-like shape. Afterwards, the edges of the aforesaid pipe-like shaped plate are joined using hybrid welding being the combination of CO₂-shielded laser welding and Ar-CO₂-shielded arc welding.

The publication US20100320174 (basis for the preamble of claims 1 to 3) is known from the state of art, where hybrid welding and then MAG welding with two wires are used.

Another solution is RU 2 660 503 C1, in which an electric arc preceding the laser beam in the distance of 10-15 mm is used - welding in two pools, and even in three ones. The distance between an electric arc and the laser beam in this system (the first welding seam) and the submerged arc is 50-70 mm. Additionally in the Russian publication a container for flux is fixed, whose task is to maintain flux in the welding zone, and the electric arc of the submerged arc is located in this container. The described method involves the MAG method, then the laser beam, and then welding by means of the submerged arc method in the container as the filling layer.

The publication US 2012/273466 uses the hybrid welding method, but with two heads. Using two heads causes more energy (heat) being introduced to the system, which results in burning the material. In this application, according to the applicant, the most important is the increase of efficiency, not heat treatment.

Another known solution RU 2 660791 C1 involves welding with two laser beams with an additional heating burner. The distance between the laser beams should be between 50 - 70 mm, and the tilting of the second laser beam is between 20 and 25 degrees.

The solution US 2012/325787 includes hybrid welding exclusively.

A method of welding gas containers of railway tank wagons according to a first aspect of the present invention is defined in claim 1.

A method of welding gas containers of railway tank wagons according to a second aspect of the present invention is defined in claim 2.

A method of welding gas containers of railway tank wagons according to a third aspect of the present invention is defined in claim 3.

The solution based on the invention enables an increase in the welding rate above 1 m/min, makes it possible to obtain the convex face and root of the weld. In addition, the solution enables the reduction of the number of necessary runs (beads) per one weld from eight to three (or even fewer) runs, depending on the thickness of the container shell. An additional advantage of the invention is the elimination of post-weld heat treatment in relation to steel grades used in the fabrication of railway tank wagon gas containers. In the invention-based method, welding is one-sided, there are no interoperative times and the making of the weld involves full penetration. The use of the above-presented welding method is accompanied by the formation of very small welding strains and very narrow heat affected zone as well as by the lack of restrictions in relation to the length of elements to be joined.

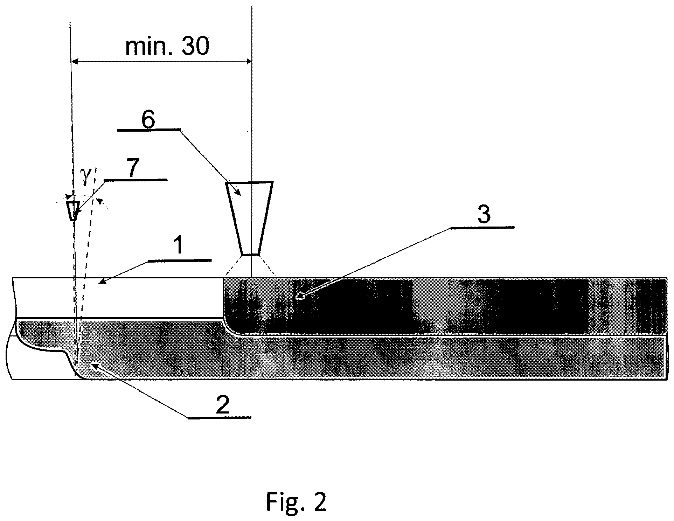

In its first embodiment of the present invention according to claim 1, invention is explained by means of Fig.1 presenting (schematically) the welding of tank wagon gas containers, Fig. 2 presenting the welding system in the yz-view, aimed to determine the optimum geometrical welding system, with two welding heads (**6**, **7**) in the yz-plane situated in the weld axis, Fig. 3 presenting the preparation of the Y-butt joint with a welding threshold of 6 mm and Fig. 4 presenting the exemplary joint made using the invention-based method.

### Implementation of the invention according to claim 1.

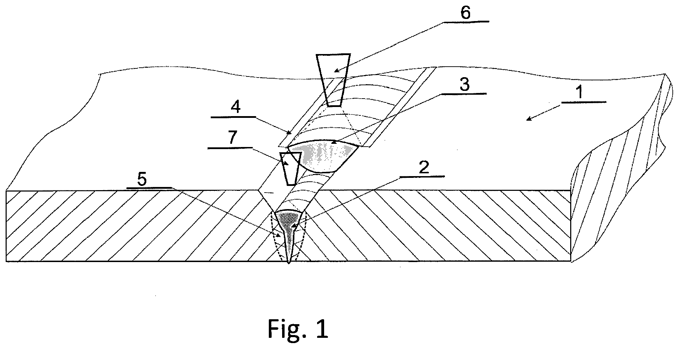

In Fig. 1, **1** indicates the material being welded (gas container shell), **2** indicates the weld made using the laser beam designated as **7, 3** indicates the weld made using arc, **4** indicates the heat affected zone resulting from the effect of submerged (electric) arc and **5** indicates the heat affected zone formed during laser beam welding. The welding process consists in the joining of gas container shell **1** using the Y-bevelled one-sided joint with the welding threshold having a height of 8 mm. Next, after butting the material, the material is subjected to welding by means of laser **2** at a rate of 1 m/min. The newly formed heat affected zone **5** is narrow and does not exceed 1 mm. At the next stage, the remaining weld groove is filled with submerged arc **6** at a rate of up to 1 mm/min. Newly formed weld **3** and wide heat affected zone **4** thermally "process" the entire laser welded joint **2** and **5,** reducing the hardness of the joint and decreasing the material susceptibility to forming unfavourable hardening structures.

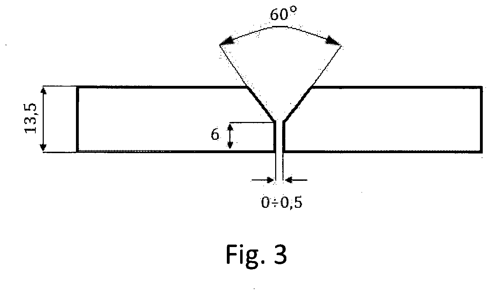

The joint of the gas container shell made of steel P460NL2 having a thickness of 13.5 mm was prepared as the Y-butt joint having a welding threshold of 6 mm (see Fig. 3).

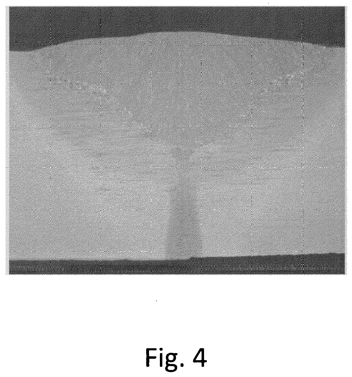

The weld was made at a rate of 1 m/min. The first stage involved the Ar-shielded laser beam welding performed using the disc laser having a power of 12 kW and generating the laser beam having a power of 4kW. The second stage involved the making of the weld filling the weld groove using the submerged arc welding method and an arc linear energy of 1.50 kJ/mm. The material was not subjected to preheating before welding. During submerged arc welding, the heat affected zone thermally "processed" the hybrid welded joint. The hardness of the joint did not exceed 295 HV10. The exemplary joint is presented in Fig. 4.

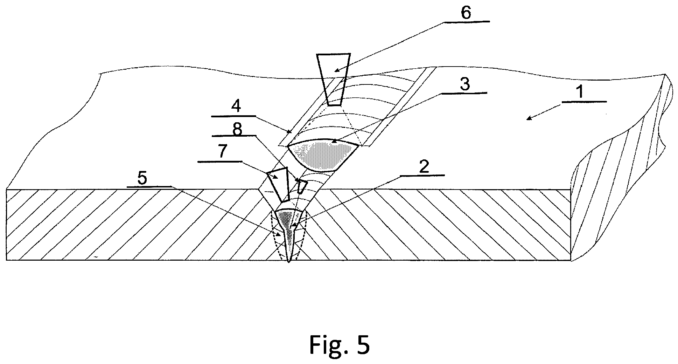

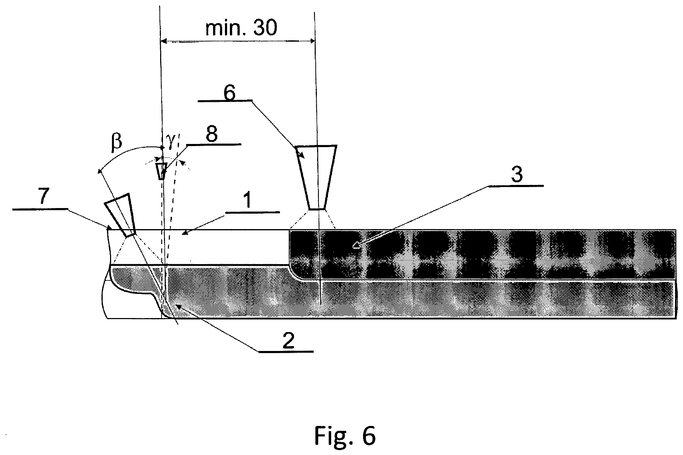

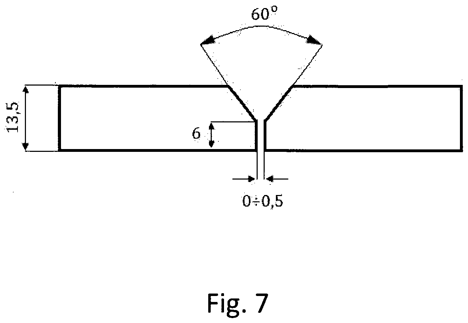

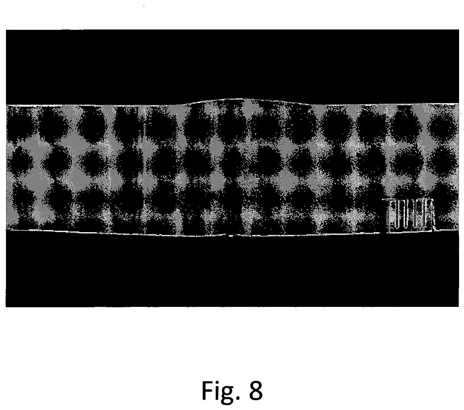

In a second embodiment of the present invention according to claim 2, the invention is explained by means of Fig. 5 presenting (schematically) the welding of tank wagon gas containers, Fig. 6 presenting the welding system in the xz-view, aimed to determine the optimum geometrical welding system, with all three welding heads (6, 7 and 8) in the yz-plane situated in the weld axis, Fig. 7 presenting the preparation of the Y-butt joint with a welding threshold of 6 mm and Fig. 8 presenting the exemplary joint made using the invention-based method.

### Implementation of the invention according to claim 2.

In Fig. 5, **1** indicates the material being welded (gas container shell), **2** indicates the weld made using the hybrid MAG method designated as **7, 8** indicates the laser, **3** indicates the weld made using submerged arc designated as **6, 4** indicates the heat affected zone formed as a result of the effect of submerged electric arc and **5** indicates the heat affected zone formed during hybrid welding. The welding process consists in the joining of gas container shell **1** using the Y-bevelled one-sided joint with the welding threshold having a height of 8 mm. Next, after butting the material, the material is subjected to hybrid (MAG + Laser) welding **7, 8** at a rate of 1 m/min. The newly formed heat affected zone **5** is narrow and does not exceed 1 mm. At the next stage, the remaining weld groove is filled with submerged arc **6** at a rate of up to 1 mm/min. Newly formed weld **3** and wide heat affected zone **4** thermally "process" the entire hybrid joint **2** and **5,** reducing the hardness of the joint and decreasing the material susceptibility to forming unfavourable hardening structures.

The joint of the gas container shell made of steel P460NL2 having a thickness of 13.5 mm was prepared as the Y-butt joint having a welding threshold of 6 mm (see Fig. 7).

The weld was made at a rate of 1 m/min. At the first stage, the weld was made using the Ar/CO₂-shielded MAG hybrid welding process and the inert gas-shielded laser welding process (laser having a power of 12kW). The linear energy of the hybrid system amounted to 0.51 kJ/mm. The second stage involved the making of the weld filling the weld groove using the submerged arc welding method and an arc linear energy of 1.50 kJ/mm. The material was not subjected to preheating before welding. During submerged arc welding, the heat affected zone thermally "processed" the hybrid welded joint. The hardness of the joint did not exceed 295 HV10. The exemplary joint is presented in Fig. 8.

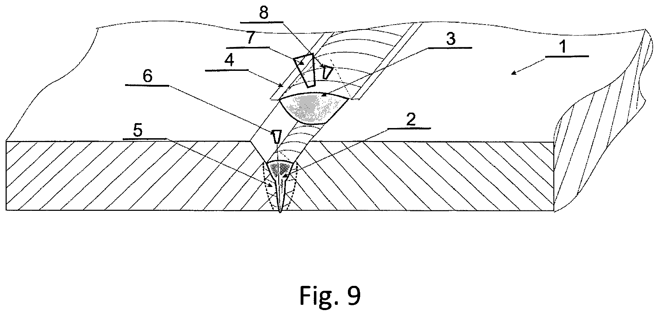

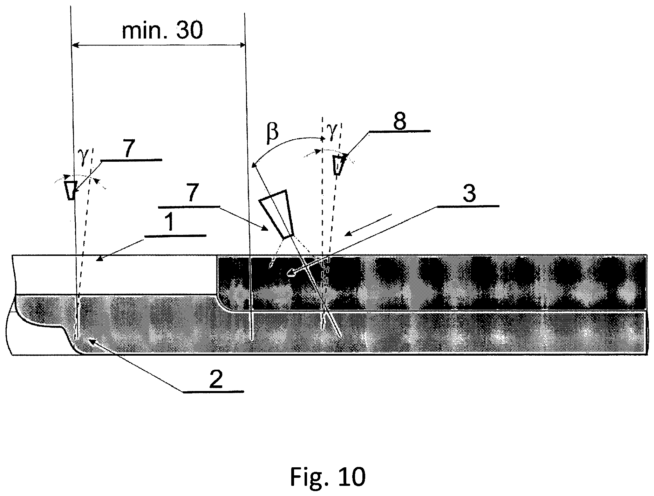

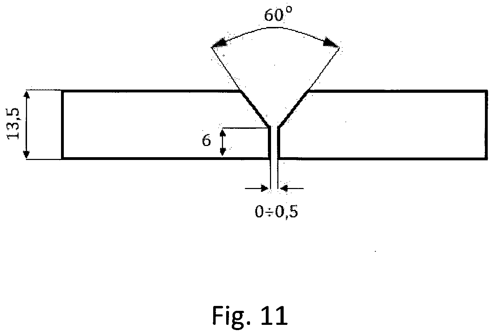

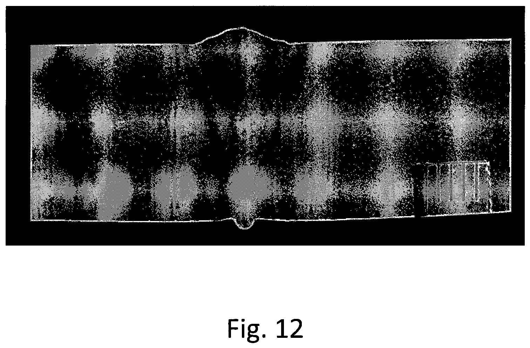

In a third embodiment of the present invention according to claim 3, the invention is explained by means of Fig. 9 presenting (schematically) the welding of tank wagon gas containers, Fig. 10 presenting the welding system in the yz-view, aimed to determine the optimum geometrical welding system, with the welding heads **(6, 7 and 8)** in the yz-plane situated in the weld axis, Fig. 11 presenting the preparation of the Y-butt joint with a welding threshold of 6 mm and Fig. 12 presenting the exemplary joint made using the invention-based method.

### Implementation of the invention according to claim 3.

In Fig. 9,**1** indicates the material being welded (gas container shell), **2** indicates the weld made using the laser beam designated as **6, 3** indicates the weld made using the hybrid method, **4** indicates the heat affected zone resulting from the effect of electric arc and the hybrid system laser beam and **5** indicates the heat affected zone formed during the laser welding process. The welding process consists in the joining of gas container shell **1** using the Y-bevelled one-sided joint with the welding threshold having a height of 8 mm. Next, after butting the material, the material is subjected to laser welding **2** at a rate of 1 m/min. The newly formed heat affected zone **5** is narrow and does not exceed 1 mm. At the next stage, the remaining weld groove is filled using the hybrid MAG + Laser method **7** and **8** at a rate of up to 1 mm/min. Newly formed weld **3** and wide heat affected zone **4** thermally "process" the entire laser welded joint **2** and **5,** reducing the hardness of the joint and decreasing the material susceptibility to forming unfavourable hardening structures.

The joint of the gas container shell made of steel P460NL2 having a thickness of 13.5 mm was prepared as the Y-butt joint having a welding threshold of 6 mm (see Fig. 11).

The weld was made at a rate of 1 m/min. The first stage involved the Ar-shielded laser beam welding performed using the disc laser having a power of 12 kW and generating the laser beam having a power of 4kW. The second stage involved the making of the weld filling the weld groove using the hybrid MAG + Laser welding method and the system linear energy amounting to 0.5 kJ/mm. The material was not subjected to preheating before welding. During hybrid welding, the heat affected zone thermally "processes" the laser welded joint. The hardness of the joint did not exceed 300 HV10. The exemplary joint is presented in Fig. 12.

## Claims

1. Method of welding gas containers of railway tank wagons, wherein a plate is subjected to cold bending in order to obtain a pipe-like shape, and then its butting edges are joined in the process of laser beam welding, in a mixture of inert gases to obtain joints (1), **characterised by the fact that** the joints **(1)** of the shell of the gas container of railway tank cars are aligned along an X-axis of a XYZ coordinate system, and joined using the laser beam **(7)** at a welding rate of more than 1m/min, and then the weld groove is filled by means of a submerged arc welding method **(6)** wherein the process of laser welding of the Y-shaped butt joint or the double-V butt joint is performed with the welding threshold of more than 2mm, one or two sidedly, wherein the submerged arc welding process is performed at least 30 mm behind the liquid metal pool welded with the laser beam (7), a wherein the laser beam **(7)** is inclined at angle y - 1-5° in the XZ plane and simultaneously maintaining all the welding heads in the weld axis in the YZ plane, so that it eliminates the necessity of a post-weld heat treatment of the obtained joints (1).

2. Method of welding gas containers of railway tank wagons, wherein a plate is subjected to cold bending in order to obtain a pipe-like shape, and then its butting edges are connected in the process of hybrid welding, in a mixture of active or inert gases to obtain joints (1), **characterised by the fact that** the joints **(1)** of the shell of the gas container of railway tank wagons are aligned along an X-axis of a XYZ coordinate system, and joined by means of the hybrid MAG **(7)** + Laser **(8)** in one liquid metal pool at a welding rate of more than 1m/min, and then the weld groove is filled by means of a submerged arc welding method, wherein the process of hybrid welding is performed by welding the prepared Y-shaped butt joint or the prepared double-V butt joint with the welding threshold of more than 2mm, one or two sidedly, wherein the submerged arc welding process is performed at least 30 mm behind the liquid metal pool welded by means of the hybrid method, wherein the electric arc of the MAG process is inclined at angle β - 0 - 60° in the XZ plane, and the laser beam at angle y - 1-5° in the XZ plane, and simultaneously maintaining all the welding heads **(6,7,8)** in the weld axis in the plane YZ, so that it eliminates the necessity of a post-weld heat treatment of the obtained joints (1).

3. Method of welding gas containers of railway tank wagons, wherein a plate is subjected to cold bending in order to obtain a pipe-like shape, and then its butting edges are connected in the process of laser beam welding, in a mixture gases to obtain joints (1), **characterised by the fact that joints (1) of the shell of the gas container of railway tank wagons are** aligned along an X-axis of a XYZ coordinate system, and joined **using the laser beam (6) at a welding rate of more than 1m/min, and then the weld groove is filled by means of** an **hybrid welding (7,8) wherein the proccess of laser welding is performed by welding the** prepared Y-shaped butt joint or the prepared double-V butt joint **with the welding** threshold **of more than 2mm, one or two sidedly,** wherein **the hybrid MAG + Laser is performed in one liquid metal pool, at least 30 mm behind the liquid metal pool welded with the laser, wherein the laser beam (6) is inclined at angle y - 1-5° in the XZ plane,** and **simultaneously maintaining all the welding heads in the weld axis in the plane YZ,** so that it eliminates the necessity of a post-weld heat treatment of the obtained joints (1).

## Patentansprüche

1. Verfahren zum Schweißen von Gasbehältern von Eisenbahnkesselwagen, bei dem eine Platte kalt gebogen wird, um eine rohrförmige Form zu erhalten, und dann ihre Stoßkanten in einem Gemisch von inerten Gasen durch Laserstrahlschweißen verbunden werden, um Verbindungen (1) zu erhalten, **dadurch gekennzeichnet, dass** die Verbindungen (1) des Mantels des Gasbehälters von Eisenbahnkesselwagen entlang einer X-Achse eines XYZ-Koordinatensystems ausgerichtet und mit dem Laserstrahl **(7)** mit einer Schweißgeschwindigkeit von mehr als 1 m/min gefügt werden und anschließend die Schweißfuge mittels eines Unterpulverschweißverfahrens **(6)** ausgefüllt wird, wobei der Prozess des Laserschweißens der Y-förmigen Stumpfverbindung oder der Doppel-V-Stumpfverbindung mit einer Schweißschwelle von mehr als 2 mm ein- oder zweiseitig durchgeführt wird, wobei der Unterpulverschweißprozess mindestens 30 mm hinter dem mit dem Laserstrahl (7) geschweißten Flüssigmetallbad durchgeführt wird, wobei der Laserstrahl **(7)** unter einem Winkel γ - 1-5° in der XZ-Ebene geneigt ist und gleichzeitig alle Schweißköpfe in der Schweißachse in der YZ-Ebene gehalten werden, so dass die Notwendigkeit einer Wärmebehandlung der erhaltenen Verbindungen (1) nach dem Schweißen entfällt.

2. Verfahren zum Schweißen von Gasbehältern von Eisenbahnkesselwagen, bei dem eine Platte kalt gebogen wird, um eine rohrförmige Form zu erhalten, und dann ihre Stoßkanten in einem Gemisch von aktiven oder inerten Gasen durch Hybrid-Schweißen verbunden werden, um Verbindungen (1) zu erhalten, **dadurch gekennzeichnet, dass** die Verbindungen **(1)** des Mantels des Gasbehälters von Eisenbahnkesselwagen entlang einer X-Achse eines XYZ-Koordinatensystems ausgerichtet und mittels des MAG **(7)** + Laser **(8)** Hybrid-Schweißens in einem Flüssigmetallbad mit einer Schweißgeschwindigkeit von mehr als 1 m/min gefügt werden und anschließend die Schweißfuge mittels eines Unterpulverschweißverfahrens ausgefüllt wird, wobei der Prozess des Hybrid-Schweißens durch Schweißen der vorbereiteten Y-förmigen Stumpfverbindung oder der vorbereiteten Doppel-V-Stumpfverbindung mit einer Schweißschwelle von mehr als 2 mm ein- oder zweiseitig durchgeführt wird, wobei der Unterpulverschweißprozess mindestens 30 mm hinter dem mit dem Hybridverfahren geschweißten Flüssigmetallbad durchgeführt wird, wobei der Lichtbogen des MAG-Verfahrens unter einem Winkel β - 0 - 60° in der XZ-Ebene und der Laserstrahl unter einem Winkel γ-1-5° in der XZ-Ebene geneigt ist und gleichzeitig alle Schweißköpfe **(6, 7, 8)** in der Schweißachse in der YZ-Ebene gehalten werden, so dass die Notwendigkeit einer Wärmebehandlung der erhaltenen Verbindungen (1) nach dem Schweißen entfällt.

3. Verfahren zum Schweißen von Gasbehältern von Eisenbahnkesselwagen, bei dem eine Platte kalt gebogen wird, um eine rohrförmige Form zu erhalten, und dann ihre Stoßkanten in einem Gemisch von Gasen durch Laserstrahlschweißen verbunden werden, um Verbindungen (1) zu erhalten, **dadurch gekennzeichnet, dass** die Verbindungen **(1)** des Mantels des Gasbehälters von Eisenbahnkesselwagen entlang einer X-Achse eines XYZ-Koordinatensystems ausgerichtet und mit dem Laserstrahl (6) mit einer Schweißgeschwindigkeit von mehr als 1 m/min gefügt werden und anschließend die Schweißfuge mittels eines Hybrid-Schweißverfahrens **(7, 8)** ausgefüllt wird, wobei der Prozess des Lasersschweißens durch Schweißen der vorbereiteten Y-förmigen Stumpfverbindung oder der vorbereiteten Doppel-V-Stumpfverbindung mit einer Schweißschwelle von mehr als 2 mm ein- oder zweiseitig durchgeführt wird, wobei der MAG + Laser Hybrid-Schweißprozess in einem Flüssigmetallbad mindestens 30 mm hinter dem mit dem Laser geschweißten Flüssigmetallbad durchgeführt wird, wobei der Laserstrahl **(6)** unter einem Winkel γ - 1-5° in der XZ-Ebene geneigt ist und gleichzeitig alle Schweißköpfe in der Schweißachse in der YZ-Ebene gehalten werden, so dass die Notwendigkeit einer Wärmebehandlung der erhaltenen Verbindungen (1) nach dem Schweißen entfällt.

## Revendications

1. Procédé de soudage des réservoirs à gaz des wagons-citernes, selon lequel la plaque est formée à froid pour obtenir une forme de tuyau, et ses bords sont ensuite assemblés par le soudage à faisceau laser sous protection de gaz inertes obtenant les joints (1), **caractérisé en ce que** lesdits joints **(1)** de l'enveloppe du réservoir à gaz des wagons-citernes sont positionnés le long de l'axe X du système de coordonnées XYZ et assemblés par le faisceau laser **(7)** à une vitesse de soudage supérieure à 1 m/min, et ensuite, la rainure de soudure est remplie par le soudage à l'arc submergé **(6),** ledit procédé de soudage par laser du joint bout à bout sur Y ou du joint bout à bout sur X est effectué avec le talon supérieur à 2 mm, d'un seul côté ou des deux côtés, ledit soudage à l'arc submergé s'effectue à une distance d'au moins 30 mm derrière le bain de fusion soudé par le faisceau laser (7), ledit faisceau laser (7) est orienté sous un angle de γ - 1-5° sur le plan XZ et, en même temps, toutes les têtes de soudage restent sur l'axe de soudure sur le plan YZ, ce qui permet d'éliminer la nécessité d'un traitement thermique des joints (1) obtenus après soudage.

2. Procédé de soudage des réservoirs à gaz des wagons-citernes, selon lequel la plaque est formée à froid pour obtenir une forme de tuyau, et ses bords sont ensuite assemblés par le soudage hybride sous protection de gaz actifs ou inertes obtenant les joints (1), **caractérisé en ce que** lesdits joints **(1)** de l'enveloppe du réservoir à gaz des wagons-citernes sont positionnés le long de l'axe X du système de coordonnées XYZ et assemblés par le soudage hybride MAG (7) + laser **(8)** dans un seul bain de fusion, à une vitesse de soudage supérieure à 1 m/min, et ensuite la rainure de soudure est remplie par le soudage à l'arc submergé, ledit procédé de soudage hybride est réalisé par le soudage du joint bout à bout préparé sur Y ou du joint bout à bout préparé sur X, avec le talon supérieur à 2 mm, d'un seul côté ou des deux côtés, ledit soudage à l'arc submergé s'effectue à une distance d'au moins 30 mm derrière le bain de fusion soudé de manière hybride, ledit arc électrique du procédé MAG est orienté sous un angle de β - 0-60° sur le plan XZ et le faisceau laser est orienté sous un angle de γ - 1-5° sur le plan XZ, et en même temps, toutes les têtes de soudage **(6, 7, 8)** restent sur l'axe de soudure sur le plan YZ, ce qui permet d'éliminer la nécessité d'un traitement thermique des joints (1) obtenus après soudage.

3. Procédé de soudage des réservoirs à gaz des wagons-citernes, selon lequel la plaque est formée à froid pour obtenir une forme de tuyau, et ses bords sont ensuite assemblés par le soudage à faisceau laser sous protection de gaz obtenant les joints (1), **caractérisé en ce que** lesdits joints (1) de l'enveloppe du réservoir à gaz des wagons-citernes sont positionnés le long de l'axe X du système de coordonnées XYZ et assemblés par le faisceau laser (6) à une vitesse de soudage supérieure à 1 m/min, et ensuite, la rainure de soudure est remplie par le soudage hybride **(7, 8),** ledit procédé de soudage par laser du joint bout à bout préparé sur Y ou du joint bout à bout préparé sur X est effectué avec le talon supérieur à 2 mm, d'un seul côté ou des deux côtés, ledit soudage hybride MAG + laser s'effectue dans un seul bain de fusion, à une distance d'au moins 30 mm derrière le bain de fusion soudé par le laser, ledit faisceau laser **(6)** est orienté sous un angle de γ - 1-5° sur le plan XZ et, en même temps, toutes les têtes de soudage restent sur l'axe de soudure sur le plan YZ, ce qui permet d'éliminer la nécessité d'un traitement thermique des joints (1) obtenus après soudage.
